# EUROPEAN PATENT SPECIFICATION

(11) **EP 1 980 357 B1**
(45) Date of publication and mention of the grant of the patent: **15.01.2014**
(21) Application number: 06823450.9
(22) Date of filing: 16.11.2006
(51) Int. Cl.: B23K 20/227, B23K 26/00, B23K 103/20, B23K 35/28, B23K 35/362, B23K 9/23, C22C 21/02, C22C 21/06

(54) **METHOD FOR JOINING MEMBERS OF DIFFERENT KINDS**
VERFAHREN ZUM VERBINDEN VON GLIEDERN VERSCHIEDENER ART
PROCEDE POUR JOINDRE DES ELEMENTS DE DIFFERENTES SORTES

(30) Priority: 21.11.2005 JP 2005336271
(43) Date of publication of application: 15.10.2008
(73) Proprietor: KABUSHIKI KAISHA KOBE SEIKO SHO, Kobe-shi, Hyogo 651-8585 (JP)
(72) Inventor: MATSUMOTO, Tsuyoshi, c/o Fujisawa Plant in Kobe Steel, Ltd., Fujisawa-shi, Kanagawa 251-0014 (JP); SASABE, Seiji, c/o Fujisawa Plant in Kobe Steel, Ltd., Fujisawa-shi, Kanagawa 251-0014 (JP)
(74) Representative: Müller-Boré & Partner Patentanwälte
(86) International application number: PCT/JP2006/322855
(87) International publication number: WO 2007/058257

(56) References cited:
- DE-A1- 10 017 453
- JP-A- 2003 211 270
- JP-A- 2004 223 548
- DATABASE COMPENDEX [Online] ENGINEERING INFORMATION, INC., NEW YORK, NY, US; 15 May 2005 (2005-05-15), BACH F-W ET AL: "Joining of steel-aluminium hybrid structures with electron beam on atmosphere" XP002559151 Database accession no. E2006259955590
- DATABASE WPI Week 200381 Thomson Scientific, London, GB; AN 2003-868773 XP002559152 -& JP 2003 211270 A (OSAKA TRANSFORMER CO LTD) 29 July 2003 (2003-07-29)
- DATABASE WPI Week 200457 Thomson Scientific, London, GB; AN 2004-585718 XP002559153 -& JP 2004 223548 A (OSAKA TRANSFORMER CO LTD) 12 August 2004 (2004-08-12)

## Description

The present invention relates to a method for joining dissimilar members for obtaining a composite structure body of an aluminum-based material and an iron-based material to be used for various kinds of structural members of automobiles.

In order to make various kinds of structural members of automobiles lightweight, aluminum-based materials have been used partially and therefore, it has been desired to develop a method for joining dissimilar members, that is, an iron-based material and an aluminum-based material.

A melt welding method such as TIG (Tungsten Inert Gas) welding, laser welding and the like has been generally employed as a method for joining similar kind members. On the other hand, in dissimilar member joining of an aluminum-based member to be welded (hereinafter, referred to simply as "aluminum-based member") and an iron-based member to be welded (hereinafter, referred to simply as "iron-based member"), the above-mentioned melt welding method cannot be applied. This is because fragile Al-Fe type intermetallic compounds such as FeAl₃, Fe₂Al₅, or the like are formed very thickly in the interface between the aluminum-based member and the iron-based member, considerably lowering the joining strength between the aluminum-based member to be welded and the iron-based member to be welded.

Further, as an example of applying MIG (Metal Inert Gas) welding for dissimilar member joining, it is disclosed that pure aluminum and a naked steel plate are MIG-welded using a flux cored wire effective for oxide film removal as an electrode wire and a D.C. pulse electric power source (Non-Patent Document 1). However, in the case MIG welding is applied to dissimilar member joining, since electric current has to be converged in the D.C. pulse MIG, arc tends to become unstable, resulting in frequent occurrence of sputtering and insufficient cleaning action for removing oxide film.

For that, as a conventional dissimilar member joining method, brazing using aluminum-based brazing filler materials disclosed in Patent Documents 1 and 2 and Non-Patent Document 2 has been commonly employed.

Further, there is a method for joining an aluminum-based member and an iron-based member by spot welding but not by brazing.

Further, a laser roll joining method for dissimilar metals is also proposed (Patent Document 3). This method is for joining both metal plates by heating only a first metal plate by laser radiation, thereafter, pushing and closely attaching the heated part of the first metal plate to a second metal plate by using pressure welding roller, and thus causing plastic deformation.
Patent Document 1: JP 7-148571 A
Patent Document 2: JP 10-314933 A
Patent Document 3: JP 3535152 B
Non-Patent Document 1: "Investigation and Study on Dissimilar Aluminum/Steel Joining Technique by Fusion Process" p75-93, 2002 Achievement Reports (March 2003), Joining and Welding Research Institute Osaka University
Non-Patent Document 2: Quarterly Journal of the Japan Welding Society vol. 22 no. 2 p 315-322 (2004)

Database WPI Week 200457, Thomson Scientific, London, GB, AN 2004-585718 & JP 2004 223548 A describes a method for joining aluminum and steel, wherein a solid wire containing aluminum and silicon is used.

However, the above-mentioned conventional techniques have the following problems. At first, with respect to dissimilar member joining methods by brazing, since a brazing filler material has to be inserted between an aluminum-based member to be welded and an iron-based member to be welded, there occurs a problem that the joining cost is high. Further, it is also required to suppress formation of fragile intermetallic compounds at the time of joining and that is, it is required to control steel not to be fused and therefore, it is difficult to carry out stable joining.

Further, in the case of carrying out dissimilar member joining by spot welding, since it is not line joining but point joining, liquid or gas passes in the portions between joining points, making it impossible to air-tightly or liquid-tightly seal the joining members. Further, spot welding is impossible to be carried out from one side and needed to install electrodes in both faces of a layered part, causing the joining work to be constrained.

Further, in the dissimilar member joining by the laser roll joining method, it is required to pressurize dissimilar members by rolls and thus there is a problem that a large scale apparatus is required.

In view of the above-mentioned problems, it is an object of the present invention to provide a dissimilar member joining method capable of air-tightly and liquid-tightly sealing an aluminum-based member to be welded and an iron-based member to be welded by line joining and at the same time stably joining them with high strength in a wide range of work conditions, with no need of a large scale apparatus, easily at a low cost.

The present invention provides a dissimilar member joining method as defined in claim 1.

As a general method, the aluminum-based member has a flux layer applied at least a portion to be joined to the iron-based member and two members are joined by the melt-welding method in a state that the aluminum-based member is positioned in the torch side and two members are stacked.

The flux is preferably a fluoride type flux.

The fluoride type flux is preferable at least one of aluminum fluoride and potassium fluoride.

The fluoride type flux may further contain cesium fluoride.

According to the present invention, the flux and the heated part of the aluminum-based member are melted by heat from a heat source such as laser so that the melted flux is added to the melted part of the aluminum-based member. The zinc-based coating layer on the surface of the iron-based member is melted so that the melt of aluminum or the aluminum alloy smoothly cover the surface of the iron-based member. Accordingly, the aluminum-based member and the iron-based member are firmly and closely stuck and joined with a high interface joining strength. Since the iron portion is not melted, non-metal inclusion is not produced. Further, in the case of using the flux-containing wire, since electricity is not applied to the flux-containing wire, the flux is not evaporated by arc and a joined part is stably obtained.

Fig. 1 (a) and 1(b) is a schematic view showing one example of a dissimilar member joining method of the first embodiment.
Fig. 2 is a schematic view showing a dissimilar member joining of the second embodiment of the present invention.

### EXPLANATION OF SYMBOLS

- 1: aluminum-based member
- 2: iron-based member
- 3: zinc-based coating layer
- 4.: flux layer
- 5.: laser beam
- 6.: flux-containing wire

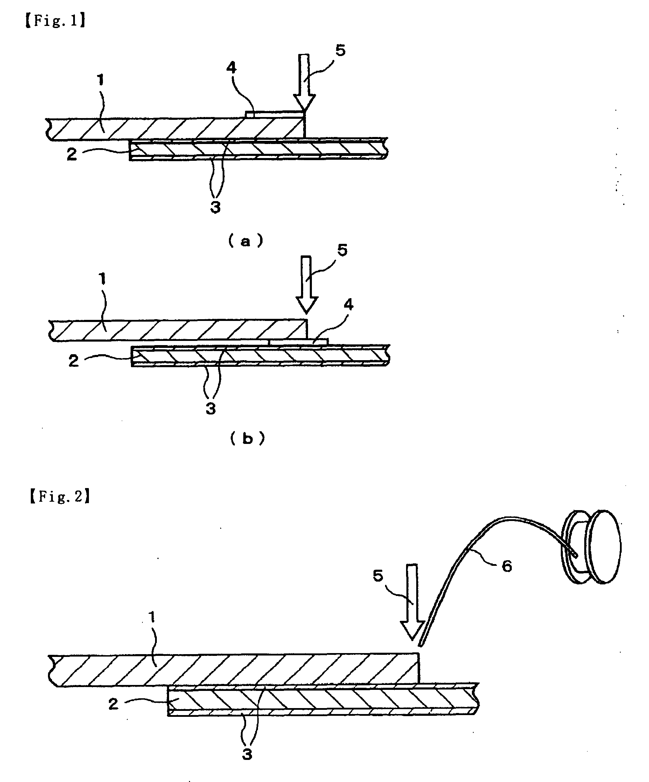

Hereinafter, a dissimilar member joining method will be substantially described with reference to accompanying drawings. In the course of the present invention, a first and a second embodiment are described, wherein the following first embodiment is not part of the invention. Figs. 1(a) and 1(b) are schematic views showing one example of a dissimilar member joining method of said first embodiment. Fig. 1 (a) is an example that a flux layer 4 formed in the aluminum-based member 1 is provided in the torch side and Fig. 1(b) is an example that a flux layer 4 formed in the aluminum-based member 1 is provided in the iron-based member 2 side. The aluminum-based member 1 with the flux layer 4 on the surface and the iron-based member 2 having the surfaces coated with the zinc-based coating layer 3 are disposed in a stacked state with the aluminum-based member 1 positioned in the torch side. It is sufficient that the flux layer 4 is formed only on the portion of the aluminum-based member 1 to be joined to the iron-based member 2. In the end face part of the aluminum-based member 1, the aluminum-based member 1 is heated and melted together with the flux layer 4 by laser beam 5 shown as an arrow in Fig. 1(a) and Fig. 1(b) to join the aluminum-based member 1 and the iron-based member 2. In this case, if needed, a welding material (filler) may be added.

During the welding, the laser beam radiated potion of the aluminum-based member 1 is melted by heat of the laser beam 5 shown as an arrow in Fig. 1 (a) and 1 (b) . At that time, the flux layer 4 applied to the surface of the aluminum-based member 1 is melted and added to the melted part of the aluminum-based member 1. Accordingly, only the zinc-based coating layer 3 on the surface of the iron-based member 2 is removed by heat reaction due to the melting heat, however the surface of the iron-based member 2 is not melted. The surface of the iron-based member 2 has improved wettability in the melted part. and the surface of the iron-based member 2 is covered smoothly with the melt of the aluminum alloy. Consequently, the aluminum-based member 1 and the iron-based member 2 are firmly stuck and as a result, firm interface joining strength can be obtained.

In this embodiment, as a joining method, a melt-welding method commonly employed for welding aluminum or an aluminum alloy can be employed. The welding method is not particularly limited. For example, laser welding, TIG welding, MIG welding, plasma welding, and electron beam welding can be employed.

Fig. 2 is a schematic view showing a dissimilar member joining method of the second embodiment of the present invention. The aluminum-based member 1 and the iron-based member 2 with the surface coated with the zinc-based coating layer 3 are disposed in a stacked state with the aluminum-based member 1 positioned in the torch side. In the end face part of the aluminum-based member 1, a flux-containing wire (flux cored wire) 6 as a filler is heated and melted by laser beam 5 shown as an arrow in Fig. 2 to join the aluminum-based member 1 and the iron-based member 2.

The flux cored wire 6 is obtained by filling the inside of a cylindrical aluminum alloy sheath with a flux. During the joining, the laser beam-radiated portion of the aluminum-based member 1 is melted by the heat of laser beam 5 shown as an arrow in Fig. 2. At that time, the flux is melted together with the aluminum alloy sheath and added to the melted part of the aluminum-based member 1. Consequently, only the zinc-based coating layer 3 on the surface of the iron-based member 2 is removed by heat reaction by the melting heat, however the surface of the iron-based member 2 is not melted. The surface of the iron-based member 2 has improved wettability in the melted part and the surface of the iron-based member 2 is covered smoothly with the melt of the aluminum alloy. Consequently, the aluminum-based member 1 and the iron-based member 2 are firmly stuck and as a result, firm interface joining strength can be obtained.

In the dissimilar member joining method of this embodiment, the aluminum-based member 1 and the iron-based member 2 are joined by a joining method involving heating by laser beam or arc of TIG welding and applying no electricity to the flux cored wire 6. If joining is carried out by a joining method involving electricity application to the flux cored wire 6, for example, MIG welding or YAG-MIG welding, since the flux has no electric conductivity, it becomes electric resistance and generates heat by electricity application so that the tip of the flux cored wire 6 is melted in excess and forms a large melt droplet and drops on the member and thus arc is intermittently interrupted, resulting in very unstable melted part formation. Further, the flux in the inside is evaporated by the arc heat at the tip of the flux cored wire 6 before it reaches the member, resulting in not only suppression of the reaction on the zinc-based coating layer 3 of the surface of the iron-based member 2 but also instability of the arc due to contamination of the evaporated flux in the welding atmosphere. Therefore, the method using the flux cored wire 6 as an electrode is impossible to give a stable joining part. In a joining method involving no electricity application to the flux cored wire 6, examples to be usable as the heat source may be laser welding, TIG welding, electron beam welding or plasma arc welding.

According to the present invention Si is added with good melt flowability in the welding part to the aluminum alloy sheath of the flux cored wire 6. Accordingly, the wettability of the joining part is assured and the interface adhesiveness can be maintained. In this case, if the addition amount of Si is less than 2% by weight, not only sufficient wettability cannot be obtained but also the strength of the welded part is decreased, resulting in deterioration of joint properties. On the other hand, if it exceeds 13% by weight, the welded part is hardened and toughness is lowered. Particularly, to obtain a high strength joint, the Si addition amount in the aluminum alloy sheath is most efficient in a range of 2 to 6% by weight.

Further, it is also preferable to add not more than 3% by weight of Mg to the aluminum alloy sheath of the flux cored wire 6. Addition of not more than 3% by weight of Mg lowers the melting point of the molten pool, allows wettability of the flux cored wire 6 to the member to be welded to be retained, causes solid solution in the welded part to improve the strength, and causes an effect to improve the joint strength. On the other hand, if it exceeds 3% by weight, reaction with Si is caused and fragile eutectic structure tends to be formed easily.

Further, it is also preferable to add not more than 1% by weight of Mn to the aluminum alloy sheath of the flux cored wire 6. Addition of not more than 1% by weight of Mn makes crystal finely granulated and improves the joint strength of the welded metal part. On the other hand, if it exceeds 1% by weight, the crystal grains are coarsened and the joint strength is lowered.

In the above-mentioned first embodiment and second embodiment, the flux which is to be applied to at least the portion of the aluminum-based member 1 to be joined with the iron-based member 2 or is to be packed in the inside of the aluminum alloy sheath as a filler is preferably a fluoride type flux including aluminum fluoride, potassium fluoride, or the like such as Nocolok (registered trade name). Further, the fluoride type flux is more preferably a flux containing Cs such as cesium fluoride. Accordingly, the active temperature of the flux is lowered and the flowability and penetration property of the aluminum melt can be enhanced, improving the jointing strength.

### Example 1

Next, to prove the effect of the dissimilar member joining method of the present invention, comparative results of tensile strength and bending strength tests of (reference) Examples with those of Comparative Examples out of the scope of the present invention will be described.

At first, a first experiment (reference) example will be described. In the first embodiment, dissimilar member joining by laser welding was carried out. Laser employed was continuously oscillating YAG (Yttrium Aluminum Garnet) laser. The processing conditions were as follows: laser output was 4.0 kW, joining rate was 1.5 m/min, and shield gas was argon. As sample materials, an AA6022 aluminum plate with a thickness of 1.0 mm was used for the aluminum-based member and a steel plate of 590 N/mm² grade, having a thickness of 1.2 mm and dip-coated with zinc was used for the iron-based member. Further, as a filler, a JIS A4047WY welding wire with a diameter of 1.6 mm was also used. Further, with respect to a flux, (1) Nocolok (registered trade name), which is a flux powder containing aluminum fluoride and potassium fluoride was used or (2) a flux powder containing 74% of cesium fluoride and balance aluminum fluoride and potassium fluoride was mixed with ethanol, the obtained mixture was applied to a portion of the aluminum-based member to be joined to the iron-based member by a brush. The application amount of the flux was 3 g/m².

The following Table 1 shows the results of the comparative test of tensile strength and bending strength with those of Comparative Examples. The tensile strength test was carried out for a test specimen of each dissimilar member joined plate processed according to JIS 5 and the breaking strength was evaluated. The evaluation shown in Table 1 was as follows: in the case the breaking strength per 1 mm joining bead was 250 N/mm or higher, Ⓞ was marked; in the case of 200 N/mm or higher, ○ was marked; in the case of 100 N/mm or higher, Δ was marked; and in the case of less than 100 N/mm, × was marked. The bending test was carried out by bending each short strip specimen (30 mm) of dissimilar member joined plates to 100 degree while the steel plate was fixed. Those which were not broken even being bent to 100 degree were marked ⊚; those which were not broken to 90 degree but broken to less than 100 degree were marked ○; those which were not broken to 45 degree but broken to less than 90 degree were marked Δ; and those which were broken to less than 45 degree were marked ×.

**[Table 1]**

| | Flux | Filler wire | Tensile test | Bending test | Evaluation |
|---|---|---|---|---|---|
| Example 1 * | (1) | No use | ⊚ | ○ | A |
| Example 2 * | (2) | No use | ⊚ | ⊚ | AA |
| Example 3 | (1) | Added | ⊚ | ⊚ | AA |
| Example 4 | (2) | Added | ⊚ | ⊚ | AA |
| Comparative Example 1 | No use | No use | × | × | E |
| Comparative Example 2 | No use | Added | Δ | Δ | B |

| | | | | | |
|---|---|---|---|---|---|
| * reference | | | | | |

According to results of Table 1, it is found that as compared with the case of dissimilar member joining by laser welding without using a flux, in the case dissimilar member joining was carried out by laser welding using flux, the strength was high in the tensile test and the bending test. Further, with respect to the fluxes, it is found that in the case of using the flux containing 74% of cesium fluoride and balance aluminum fluoride and potassium fluoride, the strength was higher than that in the case of using Nocolok (registered trade name).

Next, the second experiment (reference) example will be explained. In the second embodiment of the present invention, dissimilar member joining by laser welding was carried out. Laser employed was continuously oscillating YAG laser. The processing conditions were as follows: laser output was 4.0 kW, joining rate was 1.5 m/min, and shield gas was argon. As sample materials, an AA6022 aluminum plate with a thickness of 1.0 mm was used for the aluminum-based member and a steel plate of 590 N/mm² grade, having a thickness of 1.2 mm and dip-coated with zinc was used for the iron-based member. Further, as a filler, a JIS A4047WY welding wire with a diameter of 1.6 mm was used. Further, with respect to a flux to be packed in the inside in the aluminum alloy sheath of the welding wire as a filler, (1) Nocolok (registered trade name) or (2) a flux powder containing 74% of cesium fluoride and balance aluminum fluoride and potassium fluoride was used.

The following Table 2 shows the results of the comparative test of tensile strength and bending strength with those of Comparative Examples are shown in. The columns of Si, Mg, and Mn show the % by weight of the respective elements contained in the aluminum alloy sheath of the welding wire. The test methods of the tensile test and the bending test were same as those described in the first experiment (reference) example.

**[Table 2]**

| | Si | Mg | Mn | Flux | Tensile test | Bending test | Evaluation | Remark |
|---|---|---|---|---|---|---|---|---|
| Example 5 | 2 | 0 | 0 | (1) | ○ | ⊚ | A | |
| Example 6 | 5 | 0 | 0 | (1) | ○ | ⊚ | A | |
| Example 7 * | 9 | 0 | 0 | (1) | ○ | ○ | A | |
| Example 8 * | 13 | 0 | 0 | (1) | ○ | ○ | A | |
| Example 9 | 2 | 1.5 | 0 | (1) | ⊚ | ⊚ | AA | |
| Example 10 | 2 | 3 | 0 | (1) | ⊚ | ⊚ | AA | |
| Example 11 | 2 | 3 | 1 | (1) | ⊚ | ⊚ | AA | |
| Example 12 | 2 | 0 | 1 | (1) | ⊚ | ⊚ | AA | |
| Example 13 | 2 | 4 | 0 | (1) | ○ | ○ | A | |
| Example 14 | 2 | 0 | 2 | (1) | ○ | ○ | A | |
| Example 15 * | 13 | 1.5 | 0 | (1) | ⊚ | ○ | A | |
| Example 16 * | 13 | 3 | 0 | (1) | ⊚ | ○ | A | |
| Example 17 * | 13 | 3 | 1 | (1) | ⊚ | ○ | A | |
| Example 18 * | 13 | 0 | 1 | (1) | ⊚ | ○ | A | |
| Example 19 * | 13 | 4 | 0 | (1) | ○ | ○ | A | |
| Example 20 * | 13 | 0 | 2 | (1) | ⊚ | ○ | A | |
| Example 21 | 2 | 0 | 0 | (2) | ⊚ | ⊚ | AA | |
| Example 22 * | 13 | 0 | 0 | (2) | ⊚ | ⊚ | AA | |
| Example 23 | 2 | 0 | 1 | (2) | ⊚ | ⊚ | AA | |
| Comparative Example 3 | 0 | 0 | 0 | (1) | Δ | Δ | B | |
| Comparative Example 4 | 0 | 3 | 0 | (1) | Δ | ○ | B | |
| Comparative Example 5 | 0 | 0 | 1 | (1) | × | Δ | D | |
| Comparative Example 6 | 1 | 0 | 0 | (1) | Δ | ○ | B | |
| Comparative Example 7 | 15 | 0 | 0 | (1) | ○ | × | C | |
| Comparative Example 8 | 15 | 0 | 0 | (2) | ○ | Δ | B | |
| Comparative Example 9 | 0 | 0 | 0 | No use | Δ | Δ | B | JIS A1050WY |
| Comparative Example 10 | 5 | 0 | 0 | No use | × | × | E | JIS A4043WY |
| Comparative Example 11 | 11 | 0 | 0 | No use | Δ | Δ | B | JIS A4047WY |

| | | | | | | | | |
|---|---|---|---|---|---|---|---|---|
| * reference | | | | | | | | |

According to results of Table 2, it is found that as compared with the case of using containing no flux, in the case a welding wire containing a flux in the inside of the aluminum alloy sheath was used, the strength was high in the tensile test and the bending test. Further, in the case Si added to the aluminum alloy sheath of the welding wire was in a range of 2 to 13% by weight, the strength was high in the tensile test and the bending test. Furthermore, in the case 3% by weight or less of Mg and/or 1% by weight or less Mn was added to the aluminum alloy sheath of the welding wire, the strength was increased in the tensile test and the bending test.

Next, the third experiment (reference) example will be explained. In the first embodiment, dissimilar member joining by TIG welding was carried out. TIG employed was a welding method with D. C. opposed polarity. The processing conditions were as follows: electric current was 50 A, joining rate was 30 cpm, and shield gas was argon. Sample materials and filler employed were same as those used in the first experiment (reference) example. Further, with respect to a flux, similar to the first experiment (reference) example, (1) Nocolok (registered trade name) was used or (2) a flux powder containing 74% of cesium fluoride and balance aluminum fluoride and potassium fluoride was mixed with ethanol, the obtained mixture was applied to a portion of the aluminum-based member to be joined to the iron-based member by a brush. The application amount of the flux was 3 g/m². The following Table 3 shows the results of the comparative test of tensile strength and bending strength with those of Comparative Examples. The test methods of the tensile test and the bending test were same as those described in the first experiment (reference) example.

**[Table 3]**

| | Flux | Filler wire | Tensile test | Bending test | Evaluation |
|---|---|---|---|---|---|
| Example 24 * | (1) | No use | ○ | ⊚ | A |
| Example 25 * | (2) | No use | ⊚ | ⊚ | AA |
| Example 26 | (1) | Added | ⊚ | ⊚ | AA |
| Example 27 | (2) | Added | ⊚ | ⊚ | AA |
| Comparative Example 12 | No use | No use | × | Δ | D |
| Comparative Example 13 | No use | Added | × | Δ | D |

| | | | | | |
|---|---|---|---|---|---|
| * reference | | | | | |

According to results of Table 3, it is found that as compared with the case of TIG welding using no flux, in the case dissimilar member joining was carried out by TIG welding using the flux, the strength was high in the tensile test and the bending test. Further, in the case of adding no filler wire, the strength was higher in the tensile test when the flux containing 74% of cesium fluoride and balance aluminum fluoride and potassium fluoride was used than when Nocolok (registered trade name) was used.

Next, the fourth experiment (reference) example will be explained. In the second embodiment of the present invention, dissimilar member joining by TIG welding was carried out. TIG employed was a welding method with D. C. opposed polarity. The processing conditions were as follows: electric current was 50 A, joining rate was 30 cpm, and shield gas was argon. Sample materials and filler employed were same as those used in the second experiment example. Further, with respect to a flux to be packed in the inside in the aluminum alloy sheath of the welding wire as a filler, similarly to those in the second experiment example, (1) Nocolok (registered trade name) or (2) a flux powder containing 74% of cesium fluoride and balance aluminum fluoride and potassium fluoride was used.

The following Table 4 shows the results of the comparative test of tensile strength and bending strength with those of Comparative Examples. The columns of Si, Mg, and Mn show the % by weight of the respective elements contained in the aluminum alloy sheath of the welding wire. The test methods of the tensile test and the bending test were same as those described in the first experiment (reference) example.

**[Table 4]**

| | Si | Mg | Mn | Flux | Tensile test | Bending test | Evaluati on | Remark |
|---|---|---|---|---|---|---|---|---|
| Example 28 | 2 | 0 | 0 | (1) | ○ | ⊚ | A | |
| Example 29 | 5 | 0 | 0 | (1) | ○ | ⊚ | A | |
| Example 30 * | 9 | 0 | 0 | (1) | ○ | ⊚ | A | |
| Example 31 * | 13 | 0 | 0 | (1) | ○ | ⊚ | A | |
| Example 32 | 2 | 1.5 | 0 | (1) | ⊚ | ⊚ | AA | |
| Example 33 | 2 | 3 | 0 | (1) | ⊚ | ⊚ | AA | |
| Example 34 | 2 | 3 | 1 | (1) | ⊚ | ⊚ | AA | |
| Example 35 | 2 | 0 | 1 | (1) | ⊚ | ⊚ | AA | |
| Example 36 | 2 | 4 | 0 | (1) | ○ | ○ | A | |
| Example 37 | 2 | 0 | 2 | (1) | ○ | ○ | A | |
| Example 38 * | 13 | 1.5 | 0 | (1) | ⊚ | ⊚ | AA | |
| Example 38 * | 13 | 3 | 0 | (1) | ⊚ | ⊚ | AA | |
| Example 40 * | 13 | 3 | 1 | (1) | ⊚ | ○ | A | |
| Example 41 * | 13 | 0 | 1 | (1) | ⊚ | ⊚ | AA | |
| Example 42 * | 13 | 4 | 0 | (1) | ○ | ○ | A | |
| Example 43 * | 13 | 0 | 2 | (1) | ○ | ○ | A | |
| Example 44 | 2 | 0 | 0 | (2) | ⊚ | ⊚ | AA | |
| Example 45 * | 13 | 0 | 0 | (2) | ⊚ | ⊚ | AA | |
| Example 46 * | 13 | 0 | 1 | (2) | ⊚ | ⊚ | AA | |
| Comparative Example 14 | 0 | 0 | 0 | (1) | Δ | ○ | B | |
| Comparative Example 15 | 0 | 3 | 0 | (1) | Δ | Δ | B | |
| Comparative Example 16 | 0 | 0 | 1 | (1) | × | ○ | C | |
| Comparative Example 17 | 1 | 0 | 0 | (1) | × | ○ | C | |
| Comparative Example 18 | 15 | 0 | 0 | (1) | Δ | × | D | |
| Comparative Example 19 | 15 | 0 | 0 | (2) | ○ | Δ | B | |
| Comparative Example 20 | 0 | 0 | 0 | No use | Δ | Δ | B | JIS A1050WY |
| Comparative Example 21 | 5 | 0 | 0 | No use | Δ | × | D | JIS A4043WY |
| Comparative Example 22 | 11 | 0 | 0 | No use | × | Δ | D | JIS A4047WY |

| | | | | | | | | |
|---|---|---|---|---|---|---|---|---|
| * reference | | | | | | | | |

According to results of Table 4, it is found that in the case Si added to the aluminum alloy sheath of the welding wire was in a range of 2 to 13% by weight, the strength was high in the tensile test and the bending test. Furthermore, in the case 3% by weight or less of Mg and/or 1% by weight or less Mn was added to the aluminum alloy sheath of the welding wire, the strength was increased in the tensile test and the bending test. Further, it is also understood with respect to the flux that the strength was higher in the tensile test when the flux containing 74% of cesium fluoride and balance aluminum fluoride and potassium fluoride was used than when Nocolok (registered trade name) was used.

Next, the fifth experiment (reference) example will be explained. In the first embodiment, dissimilar member joining by MIG welding was carried out. MIG employed was an A.C. welding method. The processing conditions were as follows: electric current was 50 A, joining rate was 40 cpm, and shield gas was argon. Sample materials and filler employed were same as those used in the first experiment example. Further, with respect to a flux, similar to the first experiment example, (1) Nocolok (registered trade name) or (2) a flux powder containing 74% of cesium fluoride and balance aluminum fluoride and potassium fluoride was mixed with ethanol, the obtained mixture was applied to a portion of the aluminum-based member to be joined to the iron-based member by a brush. The application amount of the flux was 3 g/m². The following Table 5 shows the results of the comparative test of tensile strength and bending strength with those of Comparative Examples. The test methods of the tensile test and the bending test were same as those described in the first experiment (reference) example.

**[Table 5]**

| | Flux | Tensile test | Bending test | Evaluation |
|---|---|---|---|---|
| Example 47 * | (1) | ⊚ | ⊚ | AA |
| Example 48 * | (2) | ⊚ | ⊚ | AA |
| Comparative Example 23 | No use | × | × | E |

| | | | | |
|---|---|---|---|---|
| * reference | | | | |

According to results of Table 5, it is found that as compared with the case of MIG welding using no flux, in the case dissimilar member joining was carried out by MIG welding using the flux, the strength was high in the tensile test and the bending test.

## Claims

1. A dissimilar member joining method for welding an aluminum-based member to be welded of aluminum or an aluminum alloy and an iron-based member to be welded, wherein said iron-based member has a zinc-based coating layer of zinc or a zinc alloy covering the surface of the iron-based member and said two members are joined by a melt-welding method using a flux while melting said flux during the welding,
wherein said two members are joined by the melt-welding method using a flux cored wire obtained by filling the inside of an aluminum alloy sheath with a flux as a filler and applying no electricity to said flux cored wire in a state that said aluminum-based member is positioned in the torch side and said two members are stacked, and
wherein said aluminum alloy sheath contains 2 to 6% by weight of Si.

2. The dissimilar member joining method according to claim 1, wherein said aluminum alloy sheath contains at least one of 3% by weight or less of Mg and 1% by weight or less of Mn.

## Patentansprüche

1. Verbindungsverfahren verschiedenartiger Bauteile zum Zusammenschweißen eines zu verschweißenden Aluminium basierten Bauteils aus Aluminium oder einer Aluminiumlegierung und eines zu verschweißenden Eisen basierten Bauteils, wobei das Eisen basierte Bauteil eine Zink basierte Beschichtung aus Zink oder einer Zinklegierung aufweist, die die Oberfläche des Eisen basierten Bauteils bedeckt und die beiden Bauteile durch ein Schmelzschweißverfahren unter Verwendung eines Flußmittels verbunden werden, wobei das Flußmittel während des Schweißens geschmolzen wird,
wobei die beiden Bauteile durch das Schmelzschweißverfahren unter Verwendung eines Drahtes mit Flußmittelkern verbunden werden, erhalten durch das Füllen des Inneren einer Umhüllung aus einer Aluminiumlegierung mit einem Flußmittel als Füllmaterial und das Anlegen keiner Elektrizität an den Draht mit Flußmittelkern in einem Zustand, wenn das Aluminium basierte Bauteil auf der Brennerseite positioniert ist und die beiden Bauteile übereinander angeordnet sind, und
wobei die Umhüllung aus einer Aluminiumlegierung 2 bis 6 Gew.-% Si enthält.

2. Verbindungsverfahren verschiedenartiger Bauteile nach Anspruch 1, wobei die Umhüllung aus einer Aluminiumlegierung mindestens eines aus 3 Gew.-% oder weniger an Mg und 1 Gew.-% oder weniger an Mn enthält.

## Revendications

1. Procédé d'assemblage d'éléments dissemblables pour le soudage d'un élément à base d'aluminium à souder avec de l'aluminium ou un alliage d'aluminium et d'un élément à base de fer à souder, dans lequel ledit élément à base de fer présente une couche de revêtement à base de zinc composée de zinc ou d'un alliage de zinc recouvrant la surface de l'élément à base de fer et lesdits deux éléments sont assemblés par un procédé de soudage par fusion en utilisant un flux tout en faisant fondre ledit flux au cours du soudage,
dans lequel lesdits deux éléments sont assemblés par le procédé de soudage par fusion en utilisant un fil fourré obtenu en remplissant l'intérieur d'une gaine en alliage d'aluminium avec un flux comme matière de remplissage et en n'appliquant pas d'électricité audit fil fourré dans un état où ledit élément à base d'aluminium est positionné du côté de la torche et lesdits deux éléments sont empilés, et
dans lequel ladite gaine en alliage d'aluminium contient 2 à 6% en poids de Si.

2. Procédé d'assemblage d'éléments dissemblables selon la revendication 1, dans lequel ladite gaine en alliage d'aluminium contient au moins l'un de 3% en poids ou moins de Mg et de 1% en poids ou moins de Mn.
